# EUROPEAN PATENT APPLICATION

(11) **EP 4 420 933 A1**
(43) Date of publication of application: **28.08.2024**
(21) Application number: 24159619.6
(22) Date of filing: 26.02.2024
(51) Int. Cl.: B60R 7/08

(54) **VEHICLE HOOK CAPABLE OF PREVENTING REEL DISENGAGEMENT AND VEHICLE**

(30) Priority: 27.02.2023 CN 202310188168
(71) Applicant: Nio Technology (Anhui) Co., Ltd, Hefei City, Anhui 230601 (CN)
(72) Inventor: SHI,, Guangyi, Hefei City, Anhui, 230601 (CN); XING,, Zhe, Hefei City, Anhui, 230601 (CN); LIU,, Hui, Hefei City, Anhui, 230601 (CN); JIANG,, Yebao, Hefei City, Anhui, 230601 (CN)
(74) Representative: Vossius & Partner Patentanwälte Rechtsanwälte mbB

(57) **Abstract**

The disclosure relates to the field of vehicle hooks, and in particular to a vehicle hook capable of preventing reel disengagement and a vehicle, aiming at solving the problem of disengagement proneness of an existing rewinding reel from mounting notches of a hook base. To this end, the vehicle hook capable of preventing reel disengagement according to the disclosure comprises a mounting portion and a rewinding reel, wherein the mounting portion is configured to be connected to a vehicle and is provided with at least two mounting notches, the rewinding reel is rotatably arranged in the mounting notches and removably connected to the mounting portion, and at least one of the at least two mounting notches is a closable notch. With the above technical solution, the stability of rotation of the rewinding reel in the mounting notches of the mounting portion can be improved, and the rewinding reel can be prevented from disengagement from a mounting seat when being subjected to an impact load or rotating at a high speed.

## Description

### Technical Field

The disclosure relates to the field of vehicle hooks, in particular to a vehicle hook capable of preventing reel disengagement and a vehicle.

### Background Art

Vehicles are second living spaces for people, and the passenger's requirements for the vehicles lie not only in meeting daily commuting, but also in providing convenience for traveling. Especially with the improvement of the quality of life, whether going out for shopping or traveling back to hometown, people often carry a lot of items with a vehicle, and hooks on inner side walls of the vehicle provide convenience for people to place their items. Therefore, whether the hooks in the vehicle can provide convenience affects the riding experiences of people to a certain extent.

In the prior art, fixed hooks are often used for hanging items in a vehicle, such fixed hooks have a fixed height, and the hooks are open at a hanging portion. However, when an item is to be hanged from the hook via a handle or a hangable portion, the item with a relatively high height cannot be hanged due to the fixed height of the hook, and the item would be released accidentally from the hook when the vehicle bumps. In order to deal with this situation, closed-loop means formed by pulling a webbing is an effective solution to effectively solve the above problems. However, for a rewinding reel as a functional part of a vehicle, generally, an open mounting notch is provided on each side of a base for a rotating shaft, and the rewinding reel is engaged into the mounting notches by deformation. The rewinding reel rotates freely in the mounting notches to realize the rotation. However, the rewinding reel, when subjected to a large force, would be disengaged from open engaging grooves, causing a failure to a functional part assembly. If maintenance is required, it is necessary to remove a hook base from a side wall of the vehicle, and then engage the rewinding reel into the mounting notches from a mounting side, but this cannot fundamentally solve the problem of the disengagement of the rewinding reel from the mounting notches.

Accordingly, there is a need for a novel hook to solve the above problems in the art.

### Summary

The disclosure aims to solve the above technical problem, that is, to solve the problem of an existing rewinding reel easily disengaging from mounting notches of a hook base. To this end, the disclosure provides a vehicle hook capable of preventing reel disengagement, the hook including:
a mounting portion configured to be connected to a vehicle, at least two mounting notches being provided on the mounting portion; and
a rewinding reel rotatably arranged in the mounting notches and removably connected to the mounting portion; wherein
at least one of the at least two mounting notches is a closable notch.

In a particular implementation of the vehicle hook capable of preventing reel disengagement described above, an adjustable structure is provided for at least one of the at least two mounting notches to form a closed notch.

In a particular implementation of the vehicle hook capable of preventing reel disengagement described above, the adjustable structure includes an adjustment portion movably arranged at an entrance to the mounting notch, the adjustment portion has a degree of freedom to shift in an axial direction of the rewinding reel, and the adjustment portion overlaps with the rewinding reel after the shift.

In a particular implementation of the vehicle hook capable of preventing reel disengagement described above, the adjustment portion is an elastic member having one end connected to the mounting portion and the other end as a bearing end, the bearing end being resiliently shifted in the axial direction of the rewinding reel, and the bearing end overlapping with the rewinding reel.

In a particular implementation of the vehicle hook capable of preventing reel disengagement described above, slits are provided between the elastic member and the mounting portion, and the slits are located on two sides of the elastic member.

In a particular implementation of the vehicle hook capable of preventing reel disengagement described above, an end surface of the elastic member close to the rewinding reel is a first bevel, and the first bevel gradually rises in a direction of mounting of the rewinding reel, such that when an end surface of the rewinding reel abuts against the first bevel, the bearing end is shifted in a direction away from the rewinding reel.

In a particular implementation of the vehicle hook capable of preventing reel disengagement described above, a reinforcing rib is provided on the bearing end.

In a particular implementation of the vehicle hook capable of preventing reel disengagement described above, a guide notch is provided on the mounting portion, and an exit end of the guide notch faces the entrance to the mounting notch.

In a particular implementation of the vehicle hook capable of preventing reel disengagement described above, the guide notch is a trapezoidal groove, and the exit end of the guide notch is a narrower end of the trapezoidal groove.

The disclosure further provides a vehicle, including a vehicle hook capable of preventing reel disengagement according to any one of the above implementations.

With the above technical solutions, the disclosure can solve the problem of the rewinding reel being easily disengaged from the mounting notches of a hook base which may be understood as the mounting portion, open mounting notches are provided on an existing mounting portion, an entry end of each of the mounting notches is a notch smaller than the radius of mounting notch, and the entire mounting notch is a fixed portion larger than the semicircle. The rewinding reel is compressed and deformed to pass through the notch smaller than the radius of mounting notch, and the rewinding reel is fixed by the mounting notches. However, when the rotating reel is subjected to an impact load or a large acting force, the rewinding reel is likely to disengage. According to the disclosure, at least one of the at least two mounting notches is modified, that is, after the rewinding reel is mounted, one of the mounting notches forms a closed mounting notch, in this way, the removal and mounting of the rewinding reel can be achieved, and the stability of rotation of the rewinding reel on the mounting portion can also be increased, which prevents the rewinding reel from disengagement from the mounting notches of the mounting portion due to an impact load and a large acting force as much as possible.

### Brief Description of the Drawings

Preferred implementations of the disclosure are described below with reference to the accompanying drawings, in which:
FIG. 1 is a schematic structural diagram of a mounting portion in the prior art, showing the structure of open mounting notches;
FIG. 2 is an isometric view of the structure of a mounting portion according to the disclosure, showing the structure of a closed mounting notch;
FIG. 3 is a front view of the mounting portion according to the disclosure, showing a rewinding reel and the mounting portion that are connected;
FIG. 4 is a cross-sectional view taken along line A-A of FIG. 3, showing the structure of overlapping of a bearing end and the rewinding reel;
FIG. 5 is a first isometric view of the overall structure of a hook in according to the disclosure, showing the structure from a hanging portion side;
FIG. 6 is a schematic diagram of an internal structure of a hook according to the disclosure; and
FIG. 7 is a second isometric view of the overall structure of the hook according to the disclosure, showing the structure from a rewinding reel side.

List of reference numerals: 1. Mounting portion; 2. Mounting notch; 3. Rewinding reel; 4. Adjustment portion; 5. Bearing end, 6. Slit; 7. First bevel; 8. Reinforcing rib; 9. Guide notch; 10. Hanging portion. 11. Hanging slot; 12. Engaging groove. 13. Flange. 14. Attraction unit; 15. Flexible connecting portion; 16. Rewinding elastic unit; 17. Damping unit.

### Detailed Description of Embodiments

Preferred implementations of the disclosure are described below with reference to the accompanying drawings and in conjunction with a hook on a side wall of a vehicle. It should be understood by those skilled in the art that these implementations are only for explaining the technical principle of the disclosure, and are not intended to limit the scope of protection of the disclosure. Those skilled in the art can make adjustments to the implementations according to requirements, so as to adapt to specific application scenarios.

It should be noted that, in the description of the disclosure, the terms that indicate the direction or positional relationship, such as "upper", "lower", "left", "right", "inner", and "outer", are based on the direction or positional relationship shown in the accompanying drawings, which is merely for ease of description instead of indicating or implying that the related device or element must have a particular orientation and be constructed and operated in a particular orientation, and therefore, should not be construed as limiting the disclosure. Moreover, the ordinal numbers such as "first" and "second" are merely used for the illustrative purpose, and should not be construed as indicating or implying relative importance.

In addition, it should also be noted that, in the description of the disclosure, the terms "mount" and "connect" should be interpreted in a broad sense unless explicitly defined and limited otherwise. For example, the terms may mean a fixed connection, a detachable connection or an integral connection; may be a mechanical connection or an electrical connection; and may be a direct connection, or an indirect connection by means of an intermediate medium. For those skilled in the art, the specific meanings of the foregoing terms in the disclosure can be interpreted according to a specific situation.

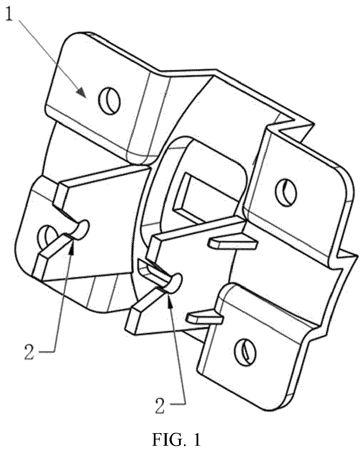

As shown in FIG. 1, a specific structure of existing mounting notches 2 of a hook base is shown, it can be seen that a rewinding reel 3 is engaged into two open mounting notches 2 on an inner side of a mounting portion 1, and the fact that the mounting notches 2 are subjected to flared deformation due to the pressing by the rewinding reel 3 to allow mounting ends of the rewinding reel 3 to be engaged into the mounting notches 2 is used. However, this also has a disadvantage that the rewinding reel is prone to disengagement. It is required to ensure that the rewinding reel 3 can not only rotate in the mounting notches 2 and but also be inserted into the mounting notches 2 in an engaged manner, so the rewinding reel 3 has a smaller diameter than the mounting notches 2. In order to ensure that entrances to the mounting notches 2 are not damaged by the deformation due to the engagement of the rewinding reel 3, the dimensions of the entrances cannot be significantly smaller than the diameter of the rewinding reel 3. Therefore, when the rewinding reel 3 is subjected to an impact load or rotates rapidly when subjected to a large force, the rewinding reel would be easily disengaged from the open mounting notches 2, resulting in the inability of the rewinding reel 3 to work normally. In addition, the mounting portion 1 is fixed to an inner wall of the vehicle by means of screws or other fasteners, if the disengagement of the rewinding reel 3 occurs, the mounting portion 1 is required to be removed from a side wall of the vehicle for service, which provides a poor use experience from the point of view of users, and the service is time-consuming and laborious.

The technical concept of the disclosure lies in that at least one of the two mounting notches 2 for mounting the rewinding reel 3 is designed to form a closed mounting notch 2 after the rewinding reel 3 is mounted, such that at least one end of the rewinding reel 3 can remain very stable when rotating, and no disengagement would be caused by an impact or high rotation speed, and when the rotational stability of one end of the rotating reel is improved, the possibility of occurrence of disengagement from the mounting notch 2 at the other end would be greatly reduced.

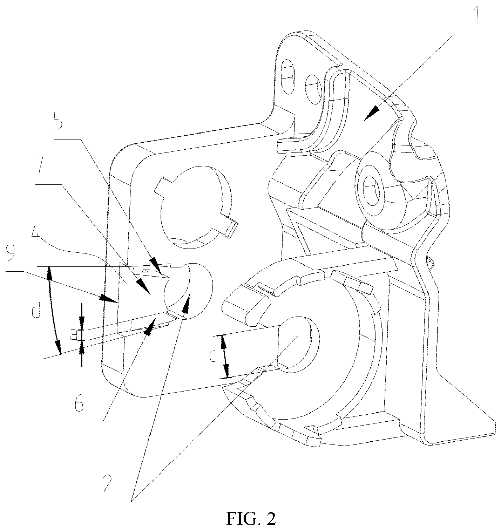

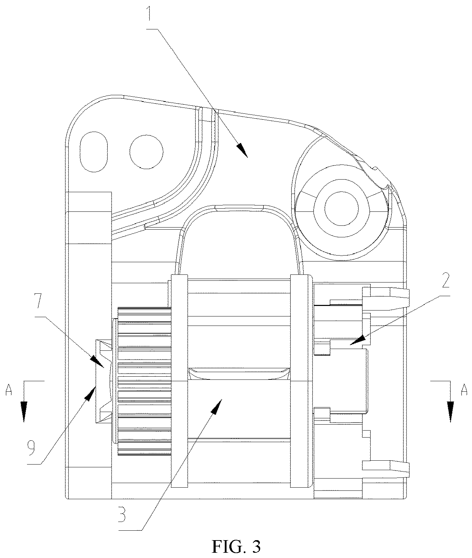

Referring to FIGS. 2 to 7, the disclosure provides a vehicle hook capable of preventing reel disengagement, the hook including:
a mounting portion 1 configured to be connected to a vehicle, at least two mounting notches 2 being provided on mounting portion 1; and
a rewinding reel 3 rotatably arranged in the mounting notches 2 and removably connected to the mounting portion 1;
wherein at least one of the at least two mounting notches 2 is a closable notch.

In this embodiment, on the basis of the above technical concept, specifically, one of the mounting notches 2 on the mounting portion 1 is designed as a structure that can form a closed notch. It should be noted that although two mounting notches 2 are provided in this embodiment, the number of the mounting notches may be adjusted according to actual mounting requirements. In this embodiment, the mounting notch 2 on one side is modified to form a closed notch. Hoverer, under the premise of the above technical concept, a closed mounting notch 2 only on one side and a closed mounting notch on each side should fall within the scope of protection of the disclosure. In addition, various structures that can form a closed loop after the rewinding reel 3 is engaged may be provided on the mounting notch 2, and it should be understood that the structures fall within the scope of protection of the disclosure without deviating from the technical concept of the disclosure, as long as the structures enable engagement on one side.

On the basis of the above embodiment, an adjustable structure is designed on the mounting notch 2 on one side to form a closed notch together with the mounting notch 2. Referring to FIG. 2, in this embodiment, the adjustable structure is specifically an elastic member having one end connected to a main body of the mounting portion 1 and the other end as a bearing end 5 and overlapping with an end of the rewinding reel 3 to enclose the rewinding reel 3 in the mounting notch 2. The bearing end 5 can be resiliently shifted along an axial direction of the rewinding reel 3 to make way for the rewinding reel 3 during mounting, and a closed mounting notch 2 is formed after the bearing end returns.

In addition to the above embodiment, on the premise of the technical concept of the disclosure, a second embodiment may also be provided, specifically, a stop block is slidably arranged on a mounting portion 1 at an entrance to a mounting notch 2, and can be shifted by sliding along an axial direction of a rewinding reel 3. In addition to relative sliding between the stop block and the mounting portion 1, a corresponding engagement point may be provided for positioning. In practical use, the stop block is first moved on the mounting portion 1 away from the rewinding reel 3 in the axial direction of the rewinding reel 3 to make room for the mounting of the rewinding reel 3 into the mounting notch 2, and after the rewinding reel 3 is engaged into the mounting notch 2, the stop block is manually moved close to the rewinding reel 3 in the axial direction of the rewinding reel 3, until the stop block overlaps with the rewinding reel 3, that is, reaches a positioning point for positioning. A bump slideway may be used for sliding of the stop block relative to the mounting portion 1, a sliding groove is provided on the stop block, the positioning point may be arranged at a bottom of the sliding groove of the stop block, and a positioning groove is provided on the bump slideway.

On the basis of the above first embodiment, still referring to FIG. 2, in order to further facilitate the deformation of the elastic member, slits 6 are provided between the elastic member and the mounting portion 1, and the slits 6 are located on two sides of the elastic member. In order to weaken the elastic member so as to more easily deform the elastic member to give way to the rewinding reel 3, the width of each of the slits 6 is set to be a, the width a is adjustable depending on the deformation effect of the elastic member, and the widths of the slits 6 may be appropriately adjusted by those skilled in the art for different types of hooks.

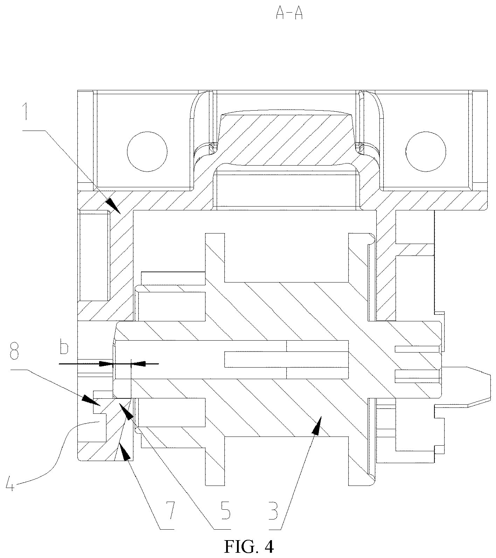

On the basis of the above embodiment, still referring to FIG. 2 and 4, an end surface of the elastic member at a side close to the end of the rewinding reel 3 is a first bevel 7. As shown, the first bevel 7 gradually rises in a direction of mounting of the rewinding reel 3, that is, is gradually inclined toward an inner side. During the mounting of the rewinding reel 3, when the rewinding reel 3 is engaged into the mounting notch 2, the end of the rewinding reel 3 would act on the first bevel 7, resulting in the shift of the bearing end 5 of the elastic member while the rewinding reel 3 is mounted, and when the rewinding reel 3 is engaged into the mounting notch 2, the bearing end 5 of the elastic member would automatically rebound and overlap with the rewinding reel 3. The angle of the first bevel is selected according to actual situations, and in this embodiment, the angle may be selected to be 15 degrees. The specific shape of the elastic member may be selected according to requirements, and the elastic member is preferably trapezoidal, and the side where the bearing end 5 located is smaller such that the bottom of the elastic member with a minimum deformation can be ensured to have a sufficient strength.

On the basis of the above embodiment, referring to FIG. 4, an overlap between the bearing end 5 and the rewinding reel 3 is b, and the overlap may be selected for hooks having different sizes according to the overlapping. In this embodiment, the open mounting notch 2 has a diameter c, and the diameter c is selected to be 1 mm. Second bevels are provided at the entrance to the open mounting notch 2, the two second bevels are arranged facing each other, and the two second bevels gradually approach each other in the direction of mounting of the rewinding reel 3 so as to serve a guiding function. The overlap b between the bearing end 5 and the rewinding reel 3 is greater than 2 mm. In order to increase the strength of the bearing end 5 of the elastic member, a reinforcing rib 8 is further provided on the bearing end 5, the reinforcing rib 8 is located on a side surface of the bearing end 5, and the specific position of the reinforcing rib may be selected according to requirements to increase the strength of the bearing end 5 of the elastic member. In this embodiment, the reinforcing rib 8 is located on the side of the elastic member opposite to the first bevel 7 and at the end of the bearing end 5, and the reinforcing rib 8 and the bearing end 5 of the elastic member both overlap with the end of the rewinding reel 3, such that the strength is increased and the overlap is also increased.

On the basis of the above embodiment, a guide notch 9 is provided on the mounting portion 1, the guide notch 9 is designed to facilitate the mounting of the rewinding reel 3, and the guide notch 9 is designed in a trapezoidal structure. When the rewinding reel 3 is mounted, the end of the rewinding reel 3 enters through a larger opening of the guide notch 9 to a narrower exit end by means of the oblique guiding of a side wall, and the exit end faces the entrance to the mounting notch 2, which facilitates the mounting of the rewinding reel 3. An included angle between two side surfaces of the guide notch 9 is d, and the angle d may be controlled in a range from 20° to 40°.

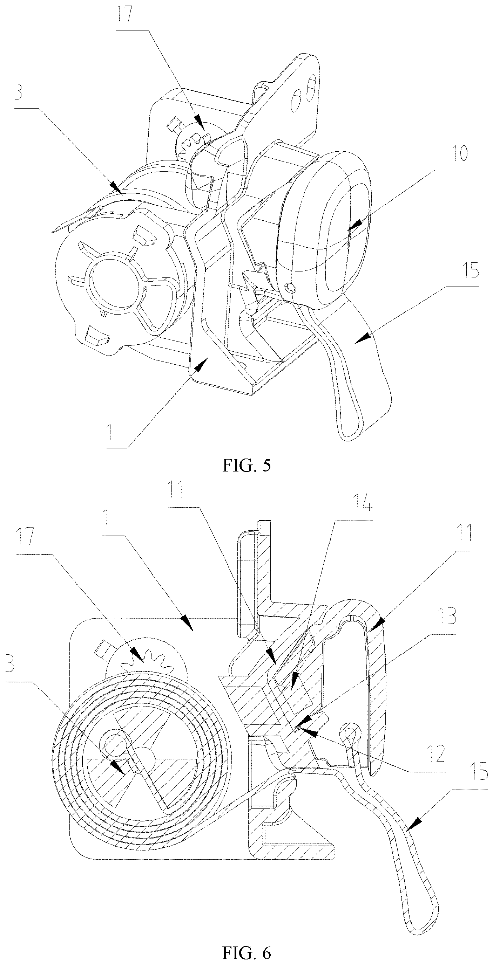

On the basis of the above embodiment, referring to FIGS. 5 to 7, the disclosure further includes:
a hanging portion 10 removably connected to the mounting portion 1 and forming a bearing portion for hanging.

The mounting portion 1 or the hanging portion 10 is provided with an inclined connecting structure to removably connect the mounting portion 1 to the hanging portion 10.

In this embodiment, the design is made on the basis of facilitating hanging for users, with a core to simplify the operations of mounting and removal, and the angle for hanging and removal is set in a line, that is, it is only necessary to mount the hanging portion 10 in one direction when mounting or removing the hanging portion, such that the mounting can be easily performed by a user who is familiar with or unfamiliar with the hook structure. Then, on the basis of the above technical concept, specifically, in this embodiment, a hanging slot 11 with an inclined upward opening is designed on the mounting portion 1, the hanging slot 11 has a flat inner wall, and the hanging portion 10 may be mounted only by inserting a part thereof into the hanging slot 11. A resistance against the mounting and removal of the hanging portion 10 is reduced by the smooth inner wall of the slot, and the operation difficulty is greatly reduced by simple linear mounting and inserting in a direction of the opening of the hanging slot 11. Since the hanging slot 11 is a slot with an inclined upward opening, after an item is hanged from the hanging portion 10, there is enough support between the hanging portion 10 and the inclined hanging slot 11 under the action of the gravity of the item to maintain the hanging, and the inclined hanging slot 11 also has a certain stability to prevent the hanged item from being released accidentally.

On the basis of the above embodiment, referring to FIG. 6, the hanging portion 10 is in insert-fit with the hanging slot 11 in the mounting portion 1. In order to further increase the stability of the insert-fit, taking the hanging slot 11 being provided in the mounting portion 1 as an example, an engaging groove 12 is arranged at the bottom of the hanging slot 11, and a flange 13 fitting with the engaging groove 12 is arranged on an insertion end on the other side, i.e., on the hanging portion 10. When the hanging portion 10 is inserted into the hanging slot 11, the flange 13 would be engaged into the engaging groove 12, which can further increase the attachment stability between the hanging portion 10 and an inner wall of the engaging groove 12.

On the basis of the above embodiment, referring to FIG. 6, in order to further increase the attachment closeness and stability of the hanging portion 10 and the mounting portion 1 after being inserted, an attraction unit 14 is further adopted to attract the hanging portion10 and the mounting portion 1 together, the two are attracted by the attraction unit 14, and a structure such as a magnetic member or a hook and loop may be used for the attraction unit 14. In this embodiment, a magnetic member is used for the attraction unit 14, and the specific mounting of the magnetic member may be unilateral or bilateral, that is, the magnetic member is mounted on one of the hanging portion 10 and the mounting portion 1, and a material capable of attracting the magnetic member is mounted on the other one, or a magnetic attraction member is mounted on each of the hanging portion 10 and the mounting portion 1. When the hanging portion 10 is inserted into the hanging slot 11, an attraction attachment is formed under the action of a magnetic force.

Referring to FIG. 6, in a solution in which a magnetic attraction member is mounted on each of the hanging portion 10 and the mounting portion 1, that is to say, the attraction unit 14 is specifically mounted on the mounting portion 1 and the hanging portion 10, two magnetic attraction members are used for the attraction unit 14, one magnetic attraction member being mounted at an end of the hanging portion 10 that goes deep into the hanging slot 11, and the other magnetic attraction member being mounted at the bottom of the hanging slot 11. In this embodiment, in order to achieve the purpose of both attraction and aesthetics, an accommodating cavity is provided in each of the hanging portion 10 and the mounting portion 1 to mount the magnetic attraction members in the accommodating cavities, and the magnetic attraction members may be fixed in the accommodating cavities by means of bonding or cover plates, so as to achieve the purpose of attraction.

On the basis of the above embodiment, referring to FIG. 6, a flexible connecting portion 15 is connected to the rewinding reel 3 at one end, and is connected to the hanging portion 10 at the other end such that the flexible connecting portion 15 can form a closed bearing portion for hanging items after the hanging portion 10 is connected to the mounting portion 1. During use, one end of the hanging portion 10 is pulled to pass through a handle portion or another hanging portion of an item to be hanged, and then the hanging portion 10 is connected to the mounting portion 1, such that a closed bearing portion is formed and the hanged item would not be released accidentally, which improve the stability of hanging the item by the hook. The flexible connecting portion 15 may be of a structure such as a rope or a webbing, and preferably a webbing, which is easy to clean and anti-aging.

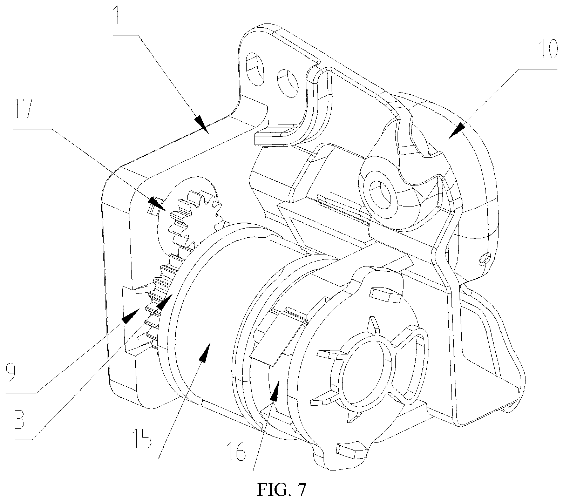

On the basis of the above-mentioned embodiment, continuing to refer to FIG. 7, a rewinding elastic unit 16 is further provided, the rewinding reel 3 is rotatably mounted on the mounting portion 1, and the rewinding elastic unit 16 is mounted at an end of the rewinding reel 3. A semicircular recess is provided on the mounting portion 1 for accommodating the rewinding elastic unit 16, and the rewinding elastic unit 16 is fixed in the semicircular recess by means of a cover plate being quickly inserted into and connected to the mounting portion 1. The flexible connecting portion 15 is wound around the rewinding reel 3 at one end, the rewinding elastic unit 16 acts on the rewinding reel 3 to impart the rewinding reel the tendency to rotate, and the rewinding reel 3 winds and retracts the flexible connecting portion 15 to the rewinding reel. Specifically, a notch is provided on the rewinding reel 3, and the flexible connecting portion 15 can enter the notch to form a connection. In this embodiment, the flexible connecting portion 15 is fixed in the notch by means of a pin shaft, and the other end of the flexible connecting portion 15 is also connected to the hanging portion 10 by means of a pin shaft. The pin shaft may be a cylindrical pin shaft or an annular pin shaft, and preferably a cylindrical pin shaft, which is easy to mount and occupies less space. In addition, the rewinding elastic unit 16 is embodied as a coil spring, the coil spring being connected to the rewinding reel 3 at an inner end, and the coil spring being connected to the mounting portion 1 at an outer end. When the flexible connecting portion 15 is pulled, the rewinding reel 3 rotates, and the rewinding elastic unit 16 is retracted, imparting the rewinding reel 3 a force to pull the flexible connecting portion 15 in a rewinding direction.

On the basis of the above embodiment, referring to FIG. 7, a damping unit 17 is mounted on the mounting portion 1, and a damping end of the damping unit 17 is in transmission connection with the rewinding reel 3. Specifically, the rewinding reel 3 may be in transmission connection with the damping end of the damping unit 17 such that the rewinding reel 3 would not be pulled out quickly when the rewinding reel is subjected to an impact force. The connection between the rewinding reel 3 and the damping unit 17 may be either friction transmission connection or gear transmission connection. The damping unit 17 can effectively protect the rewinding reel 3 and the rewinding elastic unit 16 from being pulled by an impact load, and prolong the service life of a component.

In addition to the above embodiment of the hook, the hook of the disclosure may be mounted on a corresponding vehicle, such as a car, an SUV, an MPV, a wagon, a recreational vehicle, etc.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A vehicle hook capable of preventing reel disengagement, comprising:
a mounting portion (1) configured to be connected to a vehicle, at least two mounting notches (2) being provided on the mounting portion (1); and
a rewinding reel (3) rotatably arranged in the mounting notches (2) and removably connected to the mounting portion (1);
wherein at least one of the at least two mounting notches (2) is a closable notch.

2. The vehicle hook capable of preventing reel disengagement according to claim 1, wherein an adjustable structure is provided for at least one of the at least two mounting notches (2) to form a closed notch.

3. The vehicle hook capable of preventing reel disengagement according to claim 1 or 2, wherein the adjustable structure comprises an adjustment portion (4) movably arranged at an entrance to the mounting notch (2), the adjustment portion (4) has a degree of freedom to shift in an axial direction of the rewinding reel (3), and the adjustment portion (4) overlaps with the rewinding reel (3) after the shift.

4. The vehicle hook capable of preventing reel disengagement according to claim 3, wherein the adjustment portion (4) is an elastic member having one end connected to the mounting portion (1) and the other end as a bearing end (5), the bearing end (5) being resiliently shifted in the axial direction of the rewinding reel (3), and the bearing end (5) overlapping with the rewinding reel (3).

5. The vehicle hook capable of preventing reel disengagement according to claim 4, wherein slits (6) are provided between the elastic member and the mounting portion (1), and the slits (6) are located at two sides of the elastic member.

6. The vehicle hook capable of preventing reel disengagement according to claim 4 or 5, wherein an end surface of the elastic member close to the rewinding reel (3) is a first bevel (7), and the first bevel (7) gradually rises in a direction of mounting of the rewinding reel (3), such that when an end surface of the rewinding reel (3) abuts against the first bevel (7), the bearing end (5) shifts in a direction away from the rewinding reel (3).

7. The vehicle hook capable of preventing reel disengagement according to any one of claims 4-6, wherein a reinforcing rib (8) is provided on the bearing end (5).

8. The vehicle hook capable of preventing reel disengagement according to any one of claims 3-7, wherein a guide notch (9) is provided on the mounting portion (1), and an exit end of the guide notch (9) faces the entrance to the mounting notch (2).

9. The vehicle hook capable of preventing reel disengagement according to claim 8, wherein the guide notch (9) is a trapezoidal groove, and the exit end of the guide notch (9) is a narrower end of the trapezoidal groove.

10. A vehicle, comprising a vehicle hook capable of preventing reel disengagement according to any one of claims 1-9.
